# EUROPÄISCHE PATENTSCHRIFT

(11) **EP 2 837 260 B1**
(45) Veröffentlichungstag und Bekanntmachung des Hinweises auf die Patenterteilung: **07.08.2019**
(21) Anmeldenummer: 13725047.8
(22) Anmeldetag: 15.04.2013
(51) Int. Cl.: H05B 33/08

(54) **WANDLER FÜR EIN LEUCHTMITTEL, LED-KONVERTER UND VERFAHREN ZUM BETREIBEN EINES LLC-RESONANZWANDLERS**
TRANSFORMER FOR A LAMP, LED CONVERTER, AND LLC RESONANT TRANSFORMER OPERATION METHOD
TRANSDUCTEUR POUR UN MOYEN D'ÉCLAIRAGE, CONVERTISSEUR DEL ET PROCÉDÉ DE FONCTIONNEMENT D'UN TRANSDUCTEUR RÉSONNANT LLC

(30) Priorität: 13.04.2012 AT 1462012 U; 13.04.2012 DE 102012007451
(43) Veröffentlichungstag der Anmeldung: 18.02.2015
(73) Patentinhaber: Tridonic GmbH & Co. KG, 6851 Dornbirn (AT)
(72) Erfinder: VONACH, Christoph, 6850 Dornbirn (AT)
(74) Vertreter: Banzer, Hans-Jörg
(86) Internationale Anmeldenummer: PCT/AT2013/000067
(87) Internationale Veröffentlichungsnummer: WO 2013/152370

(56) Entgegenhaltungen:
- EP-A1- 2 306 786
- WO-A1-2010/097407
- WO-A1-2011/039678
- WO-A1-2011/113948
- DE-A1-102008 064 399
- US-A1- 2010 289 419
- US-A1- 2010 327 771
- US-A1- 2011 316 449
- US-A1- 2012 025 720

## Beschreibung

Die Erfindung betrifft einen Wandler zur Versorgung eines Leuchtmittels und einen LED-Konverter mit einem derartigen Wandler. Die Erfindung betrifft insbesondere derartige Vorrichtungen, bei denen ein Leuchtmittel, insbesondere ein Leuchtmittel, das ein oder mehrere Leuchtdioden umfasst, mit einem so genannten SELV ("Separated Extra-Low Voltage" oder "Safety Extra-Low Voltage")-Gerät mit Energie versorgt wird.

Wandler mit Potentialtrennung dienen zur galvanisch entkoppelten Übertragung von elektrischer Energie von einer Eingangsseite zu einer Ausgangsseite. Derartige Wandler werden in verschiedenen Anwendungen zur Strom- oder Spannungsversorgung, wie beispielsweise in getakteten Schaltnetzteilen, eingesetzt. Bei getakteten Wandlern werden steuerbare Schalter, die in Form von Leistungsschaltern ausgestaltet sein können, verwendet und getaktet betrieben, um elektrische Energie auf die Ausgangsseite zu übertragen. Eine galvanisch entkoppelte Energieübertragung kann durch Verwendung eines Transformators oder anderen Übertragers erzielt werden. Eine derartige galvanische Trennung bzw. Potentialtrennung wird aus Sicherheitsgründen bei Betriebsgeräten für Leuchtmittel gefordert, um einen ELV ("Extra-Low Voltage")-Bereich durch eine so genannte Potentialbarriere oder SELV-Barriere von Bereichen mit höherer Versorgungsspannung, insbesondere Netzspannung, zu trennen.

Zum Betreiben von Leuchtmitteln können Wandler eingesetzt werden, die als so genannte Resonanzwandler ausgestaltet sind, die einen Resonanzkreis aufweisen. Der Resonanzkreis kann ein Serien- oder Parallelresonanzkreis sein. Bei der Ausgestaltung von Wandlern besteht das Ziel, Verluste gering zu halten. Resonanzwandler, die einen LLC-Resonanzkreis mit zwei Induktivitäten und einer Kapazität umfassen, können primärseitig resonant oder quasi-resonant gesteuert werden. Derartige Wandler haben den Vorteil, dass ein energieeffizienter Betrieb mit relativ geringen Schaltverlusten möglich ist.

Aus Sicherheitsgründen soll der Betrieb eines Wandlers erlauben, zumindest bestimmte Betriebszustände, beispielsweise Leerlauf oder Kurzschluss am Ausgang des SELV-Bereichs, zu erkennen. Ein herkömmlicher Ansatz verwendet hierzu eine direkte Messung beispielsweise der Ausgangsspannung, die in der sekundärseitigen Schaltung durchgeführt wird. Die auf der Sekundärseite erfasste Spannung kann dann über einen Isolator zur Primärseite rückgeführt wird. Die Überbrückung der SELV-Barriere erfordert entsprechende Komponenten, die Bauraum und/oder Kosten des Betriebsgeräts erhöhen. Die US 2012/0033453 A1 beschreibt ein Beispiel für einen Resonanzwandler, der eine Halbbrücke und einen LLC-Kreis umfasst und bei dem ein Isolator vorgesehen ist, um eine ausgangsseitig gemessene Größe an die Eingangsseite zurückzuführen.

Aus der Druckschrift US 2010/289419 A1 ist ein Wandler gemäß dem Oberbegriff des unabhängigen Anspruchs 1 bekannt.

Aus der Druckschrift DE 10 2008 064399 A1 ist ferner ein Verfahren und ein Betriebsgerät zum Betreiben eines Leuchtmittels bekannt, bei welchem der durch das Leuchtmittel fließende Strom geregelt wird. Dabei wird das Leuchtmittel mit einer von einem Wechselrichter erzeugten Wechselleistung versorgt.

Aus der Druckschrift US 2010/327771 A1 ist ein Verfahren und eine Vorrichtung zum Steuern von Gasentladungslampen unter Verwendung eines Gleichstrom/Wechselstrom-Wechselrichters (DC/AC-Wechselrichter) bekannt, welcher mit einer vorgegebenen Frequenz betrieben wird.

Aus der Druckschrift WO 2011/113948 A1 ist ein LED-Beleuchtungssystem mit einer modularen Betriebsschaltung mit einem ersten Modul bekannt, wobei das erste Modul ein zweites Submodul mit einem isolierten energieübertragenden DC/DC-Wandler und einer Steuereinheit aufweist.

Die Druckschrift WO 2011/039678 A1 offenbart eine LED-Treiberschaltung, die einen Resonanzwandler aufweist.

Die Druckschriften US 2012/025720 A1, die EP 2 306 786 A1, die WO 2010/097407 A1 und die US 2011/316449 A1 offenbaren weitere beispielhafte Betriebsschaltungen für Leuchtdioden.

Es besteht ein Bedarf an Vorrichtungen und Verfahren, die Verbesserungen für eine Detektion bestimmter Betriebszustände, insbesondere eines Kurzschlusses am Ausgang und/oder einer offenen Schaltung am Ausgang, bieten. Insbesondere besteht ein Bedarf an Vorrichtungen und Verfahren, bei denen der schaltungstechnische Aufwand und/oder die Kosten, die bei herkömmlichen Vorrichtungen zum Überbrücken der SELV-Barriere verbunden sind, reduziert oder vermieden werden können. Es besteht auch ein Bedarf an derartigen Vorrichtungen und Verfahren, die geringe Schaltverluste aufweisen.

Erfindungsgemäß wird ein Wandler mit den im unabhängigen Anspruch 1 angegebenen Merkmalen angegeben. Die abhängigen Ansprüche definieren Ausführungsformen.

Nach Ausführungsbeispielen der Erfindung weist ein LLC-Resonanzwandler, der eine primärseitige Halbbrückenschaltung und einen LLC-Resonanzkreis umfasst, eine Steuereinrichtung auf, die abhängig von einer Phasenlage eines Stroms in der primärseitigen Schaltung bestimmte Betriebszustände wie einen Kurzschluss am Ausgang der Sekundärseite und/oder eine offene Schaltung am Ausgang der Sekundärseite detektieren kann. Die Steuereinrichtung führt die Detektion von Fehlerzuständen, die den Ausgang der Sekundärseite betreffen, basierend auf einer Messgröße durch, die in der primärseitigen Schaltung erfasst wird.

Zur Detektion eines Fehlerzustands wird ein Zeitpunkt erfasst, an dem ein Strom, der zwischen dem LLC-Resonanzkreis und einem Referenzpotential, insbesondere Masse, fließt, einen Nulldurchgang aufweist. Es kann ermittelt werden, ob dieser Zeitpunkt innerhalb eines Intervalls um eine Referenzzeit liegt. Die Referenzzeit kann die Mitte zwischen einer ersten Schaltzeit, bei der vor dem Nulldurchgang ein erster Schalter der Halbbrückenschaltung zuletzt in den Aus-Zustand geschaltet wird, und einer zweiten Schaltzeit, bei der nach dem Nulldurchgang ein zweiter Schalter der Halbbrückenschaltung erstmalig in den Aus-Zustand geschaltet wird, sein.

Die Vorrichtungen können insbesondere eine offene Schaltung und/oder ein Kurzschluss am Ausgang der Sekundärseite erkennen. Die Vorrichtungen nutzen, dass bei dem LLC-Resonanzwandler primärseitig erfasste Messgrößen, die einen Strom in der Primärseite repräsentieren, Informationen darüber liefern können, ob eine offene Schaltung oder ein Kurzschluss am Ausgang der Sekundärseite vorliegt. Dies erlaubt, auch ohne Messung in der sekundärseitigen Schaltung eine offene Schaltung und/oder einen Kurzschluss am Ausgang der sekundärseitigen Schaltung zu detektieren.

Nach einem Ausführungsbeispiel wird ein Wandler für ein Leuchtmittel angegeben. Der Wandler umfasst eine primärseitige Schaltung und eine davon galvanisch getrennte Sekundärseite. Die primärseitige Schaltung weist eine Halbbrückenschaltung, die einen ersten Schalter und einen zweiten Schalter umfasst, und einen mit einem Knoten zwischen den Schaltern der Halbbrücke verbundenen LLC-Resonanzkreis auf. Die Sekundärseite weist einen Ausgang zur Energieversorgung des Leuchtmittels auf. Der Wandler umfasst eine Steuereinrichtung, die eingerichtet ist, um abhängig von einer Phasenlage eines Stroms in der primärseitigen Schaltung einen Fehlerzustand am Ausgang der Sekundärseite zu erkennen. Die Steuereinrichtung ist dabei dazu eingerichtet, um den durch die Phasenlage des Stroms erkannten Fehlerzustand abhängig von einem Zeitpunkt eines Nulldurchgangs des Stroms zu erkennen.

Die Steuereinrichtung kann eingerichtet sein, um Steuersignale zum getakteten Schalten der zwei Schalter der Halbbrücke zu erzeugen. Die Steuereinrichtung kann eingerichtet sein, um den Fehlerzustand am Ausgang der Sekundärseite abhängig von einer Phasenlage des primärseitigen Stroms relativ zu den Steuersignalen zu erkennen.

Die primärseitige Schaltung ist eingerichtet, um zum Erfassen des Stroms eine Spannung an einem Messwiderstand, der zwischen einen Schalter der Halbbrückenschaltung und ein Referenzpotential, insbesondere Masse, geschaltet ist, abzugreifen. Der Messwiderstand kann zwischen denjenigen Schalter, der auf der Niederpotentialseite der Halbbrücke angeordnet ist, und das Referenzpotential geschaltet sein. Ein Shunt-Widerstand kann gleichzeitig als Messwiderstand verwendet werden. Auf diese Weise kann eine einfache und kostengünstige Erfassung des primärseitigen Stroms realisiert werden.

Der Wandler kann einen Komparator umfassen, welcher einen Eingang zum Empfangen eines Messsignals, das zu dem Strom proportional ist, aufweisen kann. Die Steuereinrichtung kann mit einem Ausgang des Komparators gekoppelt sein, um den Zeitpunkt des Nulldurchgangs zu bestimmen. Dadurch wird eine einfache und kostengünstige Überwachung des Nulldurchgangs des Stroms möglich.

Die Steuereinrichtung ist eingerichtet, um eine Abweichung zwischen dem Zeitpunkt des Nulldurchgangs und einer Referenzzeit zu bestimmen und um den Fehlerzustand abhängig von einem Schwellenwertvergleich der Abweichung zu erkennen.

Die Steuereinrichtung kann eingerichtet sein, um die Referenzzeit abhängig von einer ersten Schaltzeit, bei der ein erster Schalter der Halbbrückenschaltung in einen Aus-Zustand geschaltet wird, und einer zweiten Schaltzeit, bei der ein zweiter Schalter der Halbbrückenschaltung in einen Aus-Zustand geschaltet wird, zu bestimmen. Die erste Schaltzeit kann dem letzten Schaltvorgang des ersten Schalters in den Aus-Zustand vor dem entsprechenden Nulldurchgang des Stroms entsprechen, und die zweite Schaltzeit kann dem ersten Schaltvorgang des zweiten Schalters in den Aus-Zustand nach dem entsprechenden Nulldurchgang des Stroms entsprechen. Die erste Schaltzeit kann dem N-ten Schaltvorgang des ersten Schalters in den Aus-Zustand vor dem entsprechenden Nulldurchgang des Stroms entsprechen, und die zweite Schaltzeit kann dem N-ten Schaltvorgang des zweiten Schalters in den Aus-Zustand nach dem entsprechenden Nulldurchgang des Stroms entsprechen, wobei N eine natürliche Zahl ist.

Der erste Schalter ist zwischen einen Versorgungsanschluss der primärseitigen Schaltung und den LLC-Resonanzkreis geschaltet. Der zweite Schalter istzwischen den LLC-Resonanzkreis und das Referenzpotential, insbesondere Masse, geschaltet. D.h. der erste Schalter kann der Schalter auf der Hochpotentialseite der Halbbrückenschaltung sein, und der zweite Schalter kann der Schalter auf der Niederpotentialseite der Halbbrückenschaltung sein.

Die Steuereinrichtung kann so eingerichtet sein, dass die Referenzzeit die Mitte zwischen der ersten Schaltzeit und der zweiten Schaltzeit ist.

Die Steuereinrichtung kann eingerichtet sein, um ein erstes getaktetes Steuersignal und ein zweites getaktetes Steuersignal zum Steuern der Halbbrückenschaltung zu erzeugen. Die Steuereinrichtung kann eingerichtet sein, um die Referenzzeit abhängig von sowohl dem ersten getakteten Steuersignal als auch dem zweiten getakteten Steuersignal zu bestimmen.

Die Steuereinrichtung kann eingerichtet sein, um zum Durchführen des Schwellenwertvergleichs die Abweichung zwischen dem Zeitpunkt des Nulldurchgangs und der Referenzzeit mit einem Schwellenwert zu vergleichen, der kleiner ist als eine Periode des ersten getakteten Steuersignals und des zweiten getakteten Steuersignals. Der Schwellenwert kann von einer Schaltfrequenz abhängen, mit der die Steuereinrichtung die Schalter der Halbbrückenschaltung schaltet.

Die Steuereinrichtung kann eingerichtet sein, um basierend auf dem Zeitpunkt des Nulldurchgangs des Stroms eine offene Schaltung oder einen Kurzschluss am Ausgang der Sekundärseite zu erkennen.

Nach einem weiteren Ausführungsbeispiel wird ein LED-Konverter bereitgestellt, der den Wandler nach einem Ausführungsbeispiel umfasst.

Nach einem Beispiel wird ein Beleuchtungssystem angegeben, das den LED-Konverter und ein damit gekoppeltes Leuchtmittel umfasst. Das Leuchtmittel kann ein oder mehrere Leuchtdioden (LEDs) umfassen. Die LEDs können anorganische und/oder organische LEDs umfassen. Die LEDs können in ein LED-Modul integriert sein, das separat von dem LED-Konverter ausgeführt ist. Das Beleuchtungssystem kann weiterhin eine zentrale Steuerung umfassen, die eingerichtet ist, um Dimmbefehle an den LED-Konverter zu übermitteln oder vom LED-Konverter übertragene Signale auszuwerten.

Die Erfindung wird nachfolgend unter Bezugnahme auf die beigefügte Zeichnung anhand bevorzugter Ausführungsbeispiele näher erläutert.
FIG. 1 zeigt eine schematische Darstellung eines Beleuchtungssystems mit einem LED-Konverter nach einem Ausführungsbeispiel.
FIG. 2 zeigt ein Schaltbild eines Wandlers nach einem Ausführungsbeispiel.
FIG. 3 zeigt ein vereinfachtes Schaltbild des Wandlers zur Erläuterung der Funktionsweise.
FIG. 4 illustriert Steuersignale zur Halbbrückenansteuerung, die eine Steuereinrichtung des Wandlers nach einem Ausführungsbeispiel in einem ersten Betriebsmodus erzeugt.
FIG. 5 illustriert die Funktionsweise der Steuereinrichtung bei der Erkennung eines Fehlerzustands basierend auf einer Phasenlage eines Stroms in der primärseitigen Schaltung.
FIG. 6 zeigt ein Schaltbild eines Wandlers nach einem weiteren Ausführungsbeispiel.
FIG. 7 ist ein Flussdiagramm eines Verfahrens nach einem Beispiel.

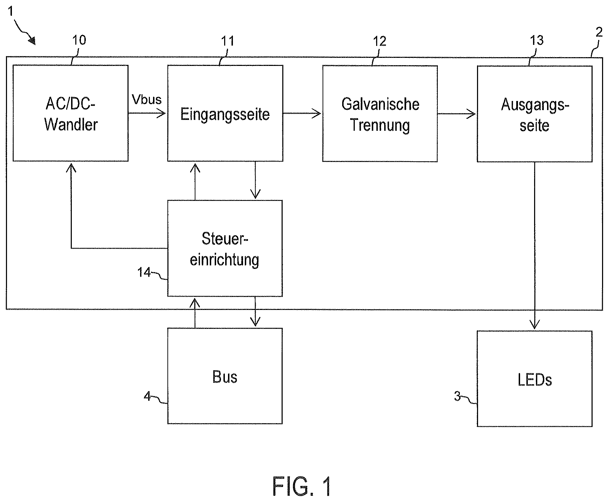

FIG. 1 zeigt ein Beleuchtungssystem 1, bei dem ein Betriebsgerät 2 nach einem Ausführungsbeispiel LEDs 3 mit Energie versorgt. Das Betriebsgerät 2 kann als LED-Konverter ausgestaltet sein. Der LED-Konverter 2 kann als Konstantstromquelle ausgebildet sein. Der LED-Konverter 2 kann so ausgestaltet sein, dass die Helligkeit der LEDs 3 über Befehle, die beispielsweise über einen Bus 4 oder drahtlos übertragen werden, einstellbar ist. Der LED-Konverter 2 kann eine entsprechende Schnittstelle zur Kommunikation mit einem zentralen Steuergerät umfassen und eingerichtet sein, um über die Schnittstelle Dimmbefehle zu empfangen.

Der LED-Konverter 2 kann als SELV-Gerät ausgestaltet sein, bei dem eine primärseitige Schaltung (beispielsweise eine nicht-SELV-Seite) und eine sekundärseitige Schaltung (beispielsweise eine SELV-Seite) galvanisch getrennt sind. Der LED-Konverter 2 kann einen AC/DC-Wandler 10 umfassen. Der AC/DC-Wandler 10 kann eingerichtet sein, um eingangsseitig mit einer Netz-spannung gekoppelt zu werden. Der AC/DC-Wandler 10 kann als so genannte Glättungsschaltung oder Schaltung zur Leistungsfaktorkorrektur (PFC) ausgestaltet sein. Der AC/DC-Wandler 10 stellt eine Busspannung Vbus an einen Wandler bereit, der eine eingangs- bzw. primärseitige Schaltung 11 und eine davon galvanisch getrennte ausgangs- bzw. sekundärseitige Schaltung 13 aufweist. Eine galvanische Trennung wird durch einen Transformator 12 oder anderen Umsetzer erreicht.

Der LED-Konverter 2 weist eine Steuereinrichtung 14 auf. Die Steuereinrichtung 14 kann eine integrierte Halbleiterschaltung, insbesondere eine anwendungsspezifische integrierte Halbleiterschaltung (ASIC, "Application Specific Integrated Circuit"), sein. Die Steuereinrichtung 14 kann in die primärseitige Schaltung 11 integriert sein. Die Steuereinrichtung 14 kann sich auf der Nicht-SELV-Seite des LED-Konverters 2 befinden.

Der LED-Konverter 2 ist so ausgestaltet, dass die Steuereinrichtung 14 automatisch Fehlerzustände erkennt, bei denen am Ausgang des LED-Konverters 2 eine offene Schaltung oder ein Kurzschluss vorliegt. Dazu kann die Steuereinrichtung 14 die Detektion des Fehlerzustands, beispielsweise einer offenen Schaltung oder eines Kurzschlusses am sekundärseitigen Ausgang des LED-Konverters 2, basierend auf einer Phasenlage eines Stroms in der primärseitigen Schaltung durchführen. Die Steuereinrichtung 14 kann den Fehlerzustand insbesondere detektieren, indem sie zur Ermittlung der Phasenlage einen Zeitpunkt, an dem der Strom einen Nulldurchgang aufweist, mit einer Referenzzeit vergleicht, die durch getaktete Steuersignale für die Halbbrückenansteuerung festgelegt ist.

Wie in FIG. 1 schematisch dargestellt ist, kann bei dem LED-Konverter 2 die Steuereinrichtung 14 Fehlerzustände, wie eine offene Schaltung oder einen Kurzschluss am Ausgang der Sekundärseite, automatisch detektieren, ohne dafür eine Messung auf der Sekundärseite durchführen zu müssen. Es ist nicht unbedingt erforderlich, auf der Sekundärseite entsprechende Komponenten zur Detektion einer offenen Schaltung oder eines Kurzschluss am Ausgang der Sekundärseite vorsehen zu müssen. Es ist auch nicht unbedingt erforderlich, sekundärseitig erfasste Werte über die SELV-Barriere an die Steuereinrichtung 14 rückführen zu müssen. Falls die Steuereinrichtung 14 einen Fehlerzustand detektiert, kann sie automatisch einen entsprechenden Betriebsmodus des LED-Konverters 2 einleiten. Ein derartiger Betriebsmodus kann beispielsweise eine Sicherheitsabschaltung und/oder die Ausgabe von Signalen, die das Vorliegen eines Fehlerzustands anzeigen, umfassen. Eine entsprechende Steuerung des LED-Konverters 2 kann wiederum auf der Primärseite erfolgen. Die Steuereinrichtung 14 kann den AC/DC-Wandler 10 und/oder die Eingangsseite 11 für einen Betriebsmodus im Fehlerfall steuern, um beispielsweise eine Sicherheitsabschaltung und/oder die Ausgabe von Signalen, die das Vorliegen eines Fehlerzustands anzeigen, zu bewirken.

Bei dem LED-Konverter 2 kann die Steuereinrichtung 14 weitere Funktionen erfüllen. Die Steuereinrichtung 14 kann beispielsweise eine Überstromschutzfunktion ausführen, bei der durch Änderung der Taktung der Schalter der Halbbrücke der primärseitige und/oder ausgangsseitige Strom verringert wird, auch wenn kein Kurzschluss vorliegt. Die Steuereinrichtung 14 kann auch herkömmliche Funktionen der Steuerung eines LED-Konverters ausführen, wie die Umsetzung von Befehlen, die über einen Bus 4 oder über eine Drahtlosschnittstelle empfangen werden, um die Helligkeit eines Leuchtmittels einzustellen.

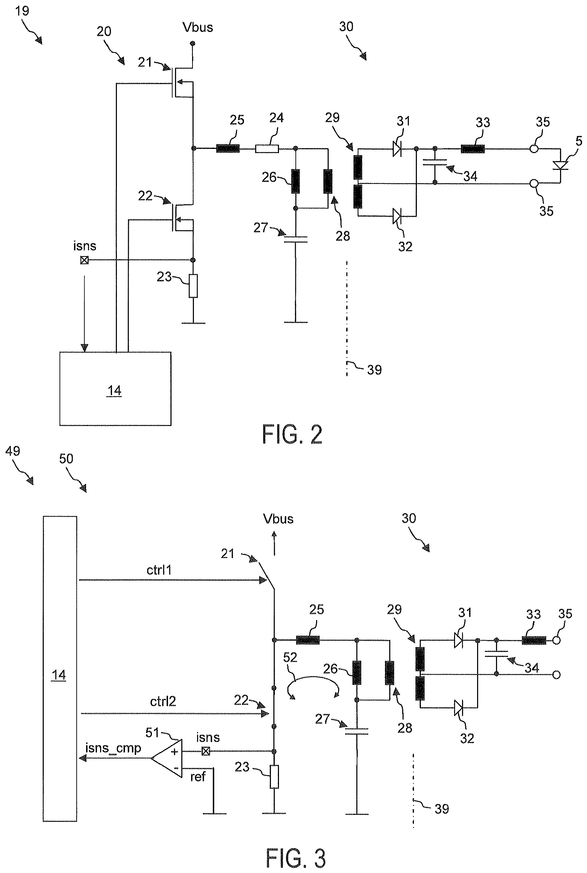

Die Funktionsweise und der Aufbau von Wandlern nach Ausführungsbeispielen werden unter Bezugnahme auf FIG. 2-7 näher beschrieben.

FIG. 2 ist ein Schaltbild eines Wandlers 19 nach einem Ausführungsbeispiel. Der Wandler 19 umfasst eine primärseitige Schaltung 20 und eine Sekundärseite 30. Es liegt Potentialtrennung zwischen der primärseitigen Schaltung 20 und der Sekundärseite 30 vor. Zur Trennung kann ein Transformator mit einer Primärspule 28 und einer Sekundärspule 29 vorgesehen sein. Der Wandler 19 kann bei dem LED-Konverter 2 oder bei einem anderen Betriebsgerät zum Betreiben von LEDs verwendet werden, um die Funktionen der in FIG. 1 dargestellten primärseitigen Schaltung 11, der galvanischen Trennung 12 und der Sekundärseite 13 zu erfüllen. Der Wandler 19 wirkt als DC/DC-Wandler. Die Sekundärseite 30 kann ein SELV-Bereich sein, der durch eine SELV-Barriere 39 vom primärseitigen Bereich getrennt ist. Die primärseitige Schaltung 20 kann alle Komponenten beinhalten, die nicht zum SELV-Bereich gehören.

Die primärseitige Schaltung 20 umfasst einen LLC-Resonanzkreis, der als Serienresonanzkreis ausgestaltet ist. Der LLC-Resonanzkreis weist eine erste Induktivität 25, eine zweite Induktivität 26 und eine Kapazität 27 in einer Serienschaltung auf. Gemäß der allgemeinen Terminologie in diesem technischen Gebiet wird der Begriff "LLC-Resonanzkreis" bzw. "LLC-Resonanzwandler" so verwendet, dass damit ein Resonanzkreis mit zwei Induktivitäten und einer Kapazität bzw. ein entsprechender Wandler bezeichnet wird, wobei es nicht darauf ankommt, ob die Induktivität 26 zwischen die Induktivität 25 und den Kondensator 27 geschaltet ist oder der Kondensator 27 zwischen die induktiven Elemente 25 und 26 geschaltet ist. Die symbolisch dargestellte zweite Induktivität 26 kann die Magnetisierungsinduktivität der Primärspule 28 des Transformators sein. Die Primärspule 28 und Sekundärspule 29 sollen in dieser Darstellung nur das Wicklungsverhältnis bzw. die galvanisch gekoppelte Energieübertragung des Transformators illustrieren. Alternativ oder zusätzlich kann auch die erste Induktivität 25 als Streuinduktivität in den Transformator integriert sein. Das zweite induktive Element 26 kann die Haupt-Induktivität des Resonanzkreises sein, deren Induktivität größer als die erste Induktivität 25 ist. Andere Ausgestaltungen des LLC-Resonanzkreises sind ebenfalls möglich. Beispielsweise kann die Kapazität 27 zwischen die Induktivitäten 25 und 26 geschaltet sein. In dem LLC-Resonanzkreis können auch Widerstände 24 vorhanden sein, die in FIG. 2 schematisch dargestellt sind und bei denen es sich um parasitäre Widerstände von Schaltungselementen und/oder um Leitungswiderstände halten kann.

Die primärseitige Schaltung 20 umfasst eine Halbbrücke mit einem ersten Schalter 21, der ein Leistungsschalter sein kann, und einem zweiten Schalter 22, der ein Leistungsschalter sein kann. Der erste Schalter 21 und der zweite Schalter 22 können identisch sein, und die Halbbrücke kann als symmetrische Halbbrücke ausgebildet sein. Die Schalter können als Feldeffekttransistoren, beispielsweise als MOSFETs ausgebildet sein. Der Resonanzkreis ist mit einem Knoten zwischen dem ersten Schalter 21 und dem zweiten Schalter 22 verbunden. Der Resonanzkreis ist mit der Mitte der Halbbrücke zwischen den zwei Schaltern 21 und 22 verbunden. Ein erster Anschluss der ersten Induktivität 25 des Resonanzkreises kann mit dem Knoten zwischen dem ersten Schalter 21 und dem zweiten Schalter 22 der Halbbrückenschaltung verbunden sein. Ein zweiter Anschluss der ersten Induktivität 25 kann mit einem ersten Anschluss der zweiten Induktivität 26 des Resonanzkreises verbunden sein. Ein zweiter Anschluss der zweiten Induktivität 26 des Resonanzkreises kann mit einem ersten Anschluss der Kapazität 27 verbunden sein. Ein Shunt-Widerstand 23 kann zwischen den zweiten Schalter 22 und ein Referenzpotential, beispielsweise Masse, geschaltet sein, um eine Fehlerabschaltung zu ermöglichen und beispielsweise Abschaltzeiten im Fall einer Fehlerabschaltung ausreichend kurz zu halten. Wie noch ausführlicher beschrieben wird, kann im Betrieb des Wandlers 19 eine über den Shunt-Widerstand 23 oder einen anderen Messwiderstand der primärseitigen Schaltung abfallende Spannung zeitaufgelöst erfasst werden. Dadurch kann die Phasenlage des Stroms ermittelt werden, der durch den zweiten Schalter 22 fließt, wenn der zweite Schalter 22 im Ein-Zustand ist.

Im Betrieb des Wandlers 19 steuert die Steuereinrichtung 14 den ersten Schalter 21 und den zweiten Schalter 22. Dabei kann jeder der Schalter jeweils mit derselben Schaltfrequenz geschaltet werden. Die Steuereinrichtung 14 steuert den ersten Schalter 21 und den zweiten Schalter 22 so, dass zu jeder Zeit maximal einer der beiden Schalter leitend geschaltet ist. Zur Einstellung der Helligkeit kann die Steuereinrichtung 14 beispielsweise die Schaltfrequenz ändern, um den Wert der frequenzabhängigen Übertragungsfunktion bzw. Verstärkung des Wandlers 19 einzustellen.

FIG. 3 zeigt eine vereinfachte Darstellung des Wandlers 49 zur Erläuterung der Wirkungsweise der Steuereinrichtung 14. Die primärseitige Schaltung 50 mit der Steuereinrichtung 14 weist eine Anordnung auf, mit der Nulldurchgänge eines Stroms in der primärseitigen Schaltung erkannt werden können.

In der primärseitigen Schaltung 50 wird ein Strom überwacht oder abgetastet, der beispielsweise durch den zweiten Schalter 22 und somit durch den als Messwiderstand dienenden Shunt-Widerstand 23 fließt, wenn der erste Schalter 21 durch ein erstes Steuersignal ctrl1 in den Aus-Zustand und der zweite Schalter 22 durch ein zweites Steuersignal ctrl2 in den Ein-Zustand geschaltet ist.

Aufgrund des getakteten Schaltens des ersten Schalters 21 und des zweiten Schalters 22 fließt in der Halbbrückenschaltung ein Strom, der sich gemäß der Schaltfrequenz der Schalter zyklisch ändert. Die resultierende Zeitabhängigkeit des Stroms, der in der primärseitigen Schaltung auftritt, hängt von der Last am Ausgang 35 der Sekundärseite ab. Insbesondere wird die Phasenlage des Stroms relativ zu der Taktung des ersten Steuersignals ctrl1 und des zweiten Steuersignals ctrl2 von der Last am Ausgang 35 der Sekundärseite ab. Während der zweite Schalter 22 durch das zweite Steuersignal ctrl2 in den Ein-Zustand geschaltet ist und der ersten Schalter 21 durch das erste Steuersignal ctrl1 in den Aus-Zustand geschaltet ist, kann eine Messgröße isns erfasst werden, die zum Strom 52 proportional ist, der fließt, wenn der zweite Schalter 22 im Ein-Zustand und der erste Schalter 21 im Aus-Zustand ist. Die Messgröße isns kann as Spannung über einen Messwiderstand, beispielsweise den Shunt-Widerstand 23 erfasst werden.

Die Phasenlage des Stroms kann abhängig von einem Zeitpunkt bestimmt werden, an dem der Strom 52 einen Nulldurchgang aufweist, während sich der zweite Schalter 22 im Ein-Zustand und der erste Schalter 21 im Aus-Zustand befindet. Zur einfachen Erkennung des Nulldurchgangs kann die zum Strom proportionale Messgröße isns einem Eingang eines Komparators 51 zugeführt werden. Der andere Eingang des Komparators 51 kann mit einer Referenz, insbesondere Masse gekoppelt sein. Ein Ausgang des Komparators 51 ist mit einem Eingang der Steuereinrichtung 14 gekoppelt. Ein Sprung im Ausgangssignal isns_cmp des Komparators 51 zeigt den Zeitpunkt des Nulldurchgangs des Stroms 52 an, aus dem ermittelt werden kann, ob am Ausgang 35 der Sekundärseite eine offene Schaltung oder ein Kurzschluss vorliegt.

Die Steuereinrichtung 14 kann als integrierte Halbleiterschaltung, insbesondere als ein Chip, insbesondere als ein ASIC, ausgestaltet sein. Dieselbe integrierte Halbleiterschaltung, die die Steuersignale ctrl1 und ctrl2 zur Halbbrückenansteuerung erzeugt, kann basierend auf der Phasenlage des in der primärseitigen Schaltung fließenden Stroms 52 erkennen, ob am Ausgang der Sekundärseite 35 eine offene Schaltung oder ein Kurzschluss vorliegt.

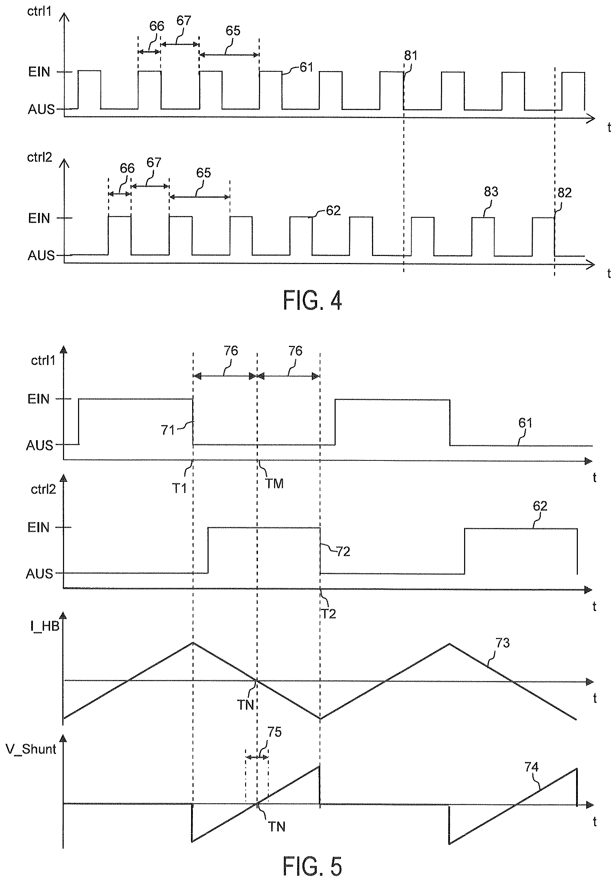

Wie unter Bezugnahme auf FIG. 5 noch näher beschrieben werden wird, kann ein Fehlerzustand, bei dem am Ausgang der Sekundärseite 35 eine offene Schaltung oder ein Kurzschluss vorliegt, abhängig von einer Abweichung zwischen dem Zeitpunkt eines Nulldurchgangs des Stroms und der zeitlichen Mitte zwischen einer ersten Schaltzeit, bei der das erste Steuersignal ctrl1 vor dem Nulldurchgang den ersten Schalter 21 in den Aus-Zustand schaltet, und einer zweiten Schaltzeit, bei der das zweite Steuersignal ctrl2 nach dem Nulldurchgang den zweiten Schalter 22 in den Aus-Zustand schaltet, erkannt werden.

FIG. 4 zeigt schematisch das von der Steuereinrichtung 14 an den ersten Schalter 21 ausgegebene Steuersignal 61 und das an den zweiten Schalter 22 ausgegebene Steuersignal 62, mit dem der entsprechende Schalter geschaltet wird. Beide Schalter werden periodisch mit derselben Schaltfrequenz geschaltet, wobei die Schalter wechselseitig getaktet sind. Das Steuersignal kann beispielsweise einer Gatespannung entsprechen, die an die Gateelektrode der Schalter angelegt wird.

Eine Schaltzyklusdauer 65 des Steuersignals 61 für den ersten Schalter 21 und eine Schaltzyklusdauer 65 des Steuersignals 62 für den zweiten Schalter 22, die jeweils als Zeit zwischen aufeinanderfolgenden steigenden Flanken des Steuersignals definiert sein kann, ist für beide Schalter gleich. Die Schaltzyklusdauer 65 entspricht der Dauer eines Schaltzyklus des ersten Schalters 21 und zweiten Schalters 22. Die Schalter 21 und 22 werden so wechselseitig getaktet geschaltet, dass jeweils nur maximal einer der Schalter leitend geschaltet ist. Eine Totzeit zwischen dem Ausschalten eines Schalters und dem Einschalten des anderen Schalters kann klein sein im Vergleich zum Inversen der Schaltfrequenz, d.h. klein im Vergleich zu der Schaltzyklusdauer 65 eines Schaltzyklus. Entsprechend kann die Dauer 67, während der die Schalter in jedem Schaltzyklus im Aus-Zustand sind, größer sein als die Zeitdauer 66, während der die Schalter in jedem Schaltzyklus im Ein-Zustand sind.

Das Inverse der Schaltzyklusdauer 65 ist die Schaltfrequenz. Die Schaltfrequenz kann so gewählt sein, dass sie beispielsweise größer als die Eigenfrequenz des LLC-Resonanzkreises ist. Die Schaltfrequenz kann im Normalbetrieb des Wandlers, in dem keine offene Schaltung und kein Kurzschluss am Ausgang 35 des Wandlers erkannt wird, verändert werden, um die Helligkeit des Leuchtmittels einzustellen.

FIG. 5 veranschaulicht die Funktionsweise der Steuereinrichtung 14 zur Detektion eines Fehlerzustands, bei dem am Ausgang 35 der Sekundärseite 30 eine offene Schaltung oder ein Kurzschluss vorliegt. In diesem Fall arbeitet der LLC-Resonanzkreis mit einem nur geringen Leistungsverbrauch, der beispielsweise durch parasitäre Widerstände 24 verursacht werden kann.

Wenn am Ausgang 35 der Sekundärseite 30 eine offene Schaltung oder ein Kurzschluss vorliegt, wird das Verhalten des LLC-Resonanzkreises durch die Induktivitäten bestimmt bzw. der LLC-Resonanzkreis arbeitet im "induktiven Modus". In diesem Fall ist der Strom, der von dem Knoten zwischen den Schaltern 21, 22 der Halbbrückenschaltung in den LLC-Resonanzkreis bzw, vom LLC-Resonanzkreis durch die Schalter 21, 22 der Halbbrückenschaltung fließt, eine im Wesentlichen dreiecksförmige Form aufweisen. Die Phasenlage des Stroms relativ zu den Steuersignalen für die Schalter 21, 22 kann 90° bzw. π/2 betragen. FIG. 5 zeigt den Strom 73 als Funktion der Zeit, der von dem Knoten zwischen den Schaltern 21, 22 der Halbbrückenschaltung in den LLC-Resonanzkreis bzw. vom LLC-Resonanzkreis durch die Schalter 21, 22 der Halbbrückenschaltung fließt. Zum Erkennen der Phasenlage des Stroms, wenn der zweite Schalter 22 in den Ein-Zustand geschaltet ist, kann die über einen Messwiderstand abfallende Spannung, beispielsweise die Spannung V_Shunt über dem Shunt-Widerstand 23, überwacht werden. Ein Zeitpunkt TN des Nulldurchgangs des Stroms, der auftritt, während der potentialniedrigere Schalter 22 der Halbbrücke in den Ein-Zustand geschaltet ist, wird erfasst.

Der Zeitpunkt TN des Nulldurchgangs des Stroms wird mit der Taktung der zeitabhängigen Steuersignale für die Schalter der Halbbrücke verglichen, um zu ermitteln, ob ein Fehlerzustand vorliegt. Dazu kann eine Referenzzeit TM bestimmt werden. Ist eine Abweichung des Zeitpunkts TN des Nulldurchgangs von der Referenzzeit TM kleiner als ein Schwellenwert, d.h. liegt der Zeitpunkt TN des Nulldurchgangs in einem Intervall 75 um die Referenzzeit TM, wird ein Fehlerzustand erkannt.

Die Referenzzeit TM kann definiert sein als zeitliche Mitte zwischen einer ersten Schaltzeit T1, bei der der potentialhöhere Schalter 21 der Halbbrücke vor dem Nulldurchgang zuletzt in den Aus-Zustand geschaltet wurde, und einer zweiten Schaltzeit T2, bei der der potentialniedrigere Schalter 22 der Halbbrücke nach dem Nulldurchgang erstmalig in den Aus-Zustand geschaltet wird. Die so definierte Referenzzeit TM ist von der Mitte der Aus-Zeit des ersten Schalters und von der Mitte der Aus-Zeit des zweiten Schalters verschieden.

Für eine Referenzzeit TM, die basierend auf sowohl der Flanke 71 des ersten Steuersignals für den ersten Schalter als auch basierend auf der Flanke 72 des zweiten Steuersignals für den zweiten Schalter definiert ist, kann anhand der Abweichung zwischen dem Zeitpunkt TN des Nulldurchgangs des Stroms und der Referenzzeit TM auf einfache Weise ein Fehlerzustand detektiert werden. Die Referenzzeit TM unterscheidet sich um dieselbe Zeitdifferenz 76 von sowohl der ersten Schaltzeit T1, bei der der potentialhöhere Schalter 21 der Halbbrücke vor dem Nulldurchgang zuletzt in den Aus-Zustand geschaltet wurde, und der zweiten Schaltzeit T2, bei der der potentialniedrigere Schalter 22 der Halbbrücke nach dem Nulldurchgang erstmalig in den Aus-Zustand geschaltet wird.

Die Steuereinrichtung 14 kann die Abweichung zwischen dem Zeitpunkt TN des Nulldurchgangs und der Referenzzeit TM auf unterschiedliche Weise erkennen. Bei einer Ausgestaltung kann die Steuereinrichtung 14 einen die Referenzzeit TM anzeigenden Wert rechnerisch ermitteln und mit dem Zeitpunkt TN des Nulldurchgang vergleichen. Der Zeitpunkt TN des Nulldurchgangs des Stroms kann beispielsweise als Sprung im Ausgangssignal des Komparators 51 erkannt werden.

Bei einer weiteren Ausgestaltung kann die Steuereinrichtung 14 sowohl einen die erste Schaltzeit T1 repräsentierenden Wert als auch einen die zweite Schaltzeit T2 repräsentierenden Wert ermitteln und den Mittelwert als Referenzzeit TM bestimmen. Die erste Schaltzeit T1 und die zweite Schaltzeit T2 können dabei durch Detektion der Signalflanken 71, 72 erkannt werden.

Bei einer weiteren Ausgestaltung kann die Steuereinrichtung 14 eine erste Zeitdifferenz zwischen der Flanke 71 des ersten Steuersignals und dem Zeitpunkt TN des Nulldurchgangs des Stroms sowie eine zweite Zeitdifferenz zwischen dem Zeitpunkt TN des Nulldurchgangs und der Flanke 72 des zweiten Steuersignals ermitteln. Die entsprechenden Signalflanken in den Steuersignalen bzw. im Ausgangssignal des Komparators können dabei als Triggersignale dienen, mit denen eine Zähleinrichtung gestartet und gestoppt wird. Der Unterschied zwischen der ersten Zeitdifferenz und der zweiten Zeitdifferenz quantifiziert die Abweichung zwischen dem Zeitpunkt TN des Nulldurchgangs des Stroms und der Referenzzeit TM.

Die Referenzzeit TM, mit der der Zeitpunkt TN des Nulldurchgangs des Stroms im LLC-Resonanzkreis bzw. des Stroms durch einen Messwiderstand in Beziehung gesetzt wird, muss nicht abhängig von den in FIG. 5 dargestellten Signalflanken 71, 72 ermittelt werden, die dem Nulldurchgang unmittelbar vorausgehen bzw. nachfolgen. Beispielsweise kann die Referenzzeit TM auch als Mitte zwischen einer Signalflanke des Steuersignals ctrl1 für den ersten Schalter 21 der Halbbrücke, die die N-te Signalflanke zum Ausschalten des ersten Schalters 21 vor dem entsprechenden Nulldurchgang des Stroms ist, und einer Signalflanke des Steuersignals ctrl2 für den zweiten Schalter 22 der Halbbrücke, die die N-te Signalflanke zum Ausschalten des zweiten Schalters 22 nach dem entsprechenden Nulldurchgang des Stroms ist, ermittelt werden. Unter Bezugnahme auf FIG. 4 kann, wenn der Nulldurchgang des Stroms, der während der Periode 83 auftritt, mit einer Referenzzeit verglichen wird, die Referenzzeit TM auch als zeitliche Mitte zwischen der in FIG. 4 dargestellten Signalflanke 81 des ersten Steuersignals und der Signalflanke 82 des zweiten Steuersignals ermittelt werden, die jeweils die zweite entsprechende Flanke vor bzw. nach dem Nulldurchgang ist.

Wenn die Steuereinrichtung 14 basierend auf der Phasenlage des Stroms in der primärseitigen Schaltung erkennt, dass ein Fehlerzustand vorliegt, beispielsweise ein offener Ausgang oder ein Kurzschluss am Ausgang, kann die Steuereinrichtung 14 automatisch einen bestimmten Betriebsmodus des Wandlers bzw. des den Wandler enthaltenden Betriebsgeräts einleiten. Beispielsweise kann ein Signal, das das Vorliegen eines Fehlers anzeigt, ausgegeben werden. Alternativ oder zusätzlich kann eine Sicherheitsabschaltung durchgeführt werden.

Weitere Ausgestaltungen von Vorrichtungen können in anderen Ausführungsbeispielen realisiert sein. Beispielsweise kann die Phasenlage des Stroms nicht nur unter Verwendung des in FIG. 3 dargestellten Komparators, sondern auch auf andere Weise ermittelt werden. Beispielsweise kann der Steuereinrichtung 14 die Messgröße zugeführt werden, die den Strom in der primären Schaltung anzeigt, wenn der zweite Schalter 22 der Halbbrücke im Ein-Zustand ist. Die Steuereinrichtung 14 kann den Strom überwachen, um den Nulldurchgang zu detektieren.

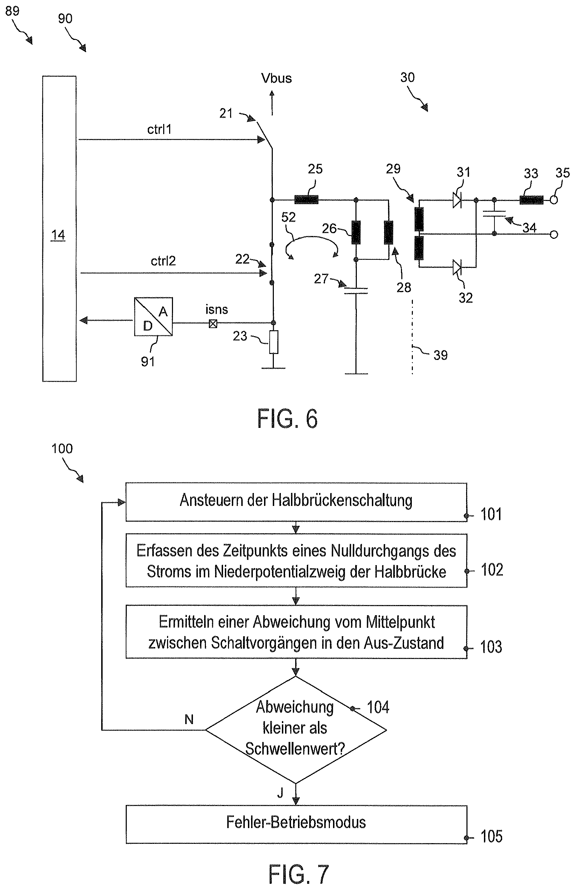

FIG. 6 zeigt einen Wandler 89 nach einem weiteren Ausführungsbeispiel. Elemente und Einrichtungen, die in Ausgestaltung und Funktion Elementen oder Einrichtungen entsprechen, die mit Bezugnahme auf FIG. 1-5 beschrieben wurden, sind mit denselben Bezugszeichen bezeichnet.

Der Wandler 89 weist eine primärseitige Schaltung 90 auf, die dem Nicht-SELV-Bereich des Wandlers 89 entsprechen kann. Die Messgröße isns, die den Strom repräsentiert, der zwischen dem LLC-Resonanzkreis und Masse fließt, wenn der Schalter 22 auf der Niederpotentialseite der Halbbrücke in den Ein-Zustand geschaltet ist, kann durch einen A/D-Wandler 91 A/D-gewandelt und der Steuereinrichtung 14 zugeführt werden. Die Steuereinrichtung 14 kann den aktuellen Wert des Stroms isns mit einer Rate abfragen, die größer als die Schaltfrequenz der Schalter 21, 22 der Halbbrücke ist. Basierend auf dem zeitabhängig erfassten Strom isns kann die Steuereinrichtung 14 durch digitale Signalverarbeitung den Zeitpunkt TN des Nulldurchgangs ermitteln und mit einer Referenzzeit TM vergleichen, wie unter Bezugnahem auf FIG. 4 beschrieben wurde.

FIG. 7 ist ein Flussdiagramm eines Verfahrens 100, das von der Steuereinrichtung 14 zum Steuern eines Wandlers durchgeführt werden kann. Der Wandler kann als Wandler nach einem Ausführungsbeispiel ausgestaltet sein. Der Wandler weist einen LLC-Resonanzkreis mit Halbbrückenansteuerung auf. Der Wandler weist eine primärseitige Schaltung und eine davon galvanisch getrennte Sekundärseite auf. Die primärseitige Schaltung kann beispielsweise ein Nicht-SELV-Bereich des Wandlers sein und die Sekundärseite kann der SELV-Bereich des Wandlers sein.

Bei 101 werden nach Betriebsstart des Wandlers die Schalter der Halbbrückenschaltung getaktet geschaltet.

Bei 102 wird ein Zeitpunkt eines Nulldurchgangs des Stroms erfasst, der zwischen dem LLC-Resonanzkreis und Masse fließt, wenn der Schalter auf der Niederpotentialseite der Halbbrückenschaltung in einen Ein-Zustand geschaltet ist.

Bei 103 wird eine Abweichung zwischen dem Zeitpunkt des Nulldurchgangs und einer Referenzzeit ermittelt. Die Referenzzeit kann eine zeitliche Mitte zwischen Schaltvorgängen sein, mit denen Schalter der Halbbrückenschaltung vor bzw. nach dem Nulldurchgang in den Aus-Zustand geschaltet werden.

Bei 104 kann die Abweichung einem Schwellenwertvergleich unterzogen werden. Falls die Abweichung größer ist als der Schwellenwert, kehrt das Verfahren zu 101 zurück. Die Ermittlung der Phasenlage des Stroms in der primärseitigen Schaltung muss nicht bei jedem Schaltzyklus erfolgen, kann aber in gewissen abständen wiederholt werden, um das Auftreten eines Fehlerzustands auch im laufenden Betriebs zu erkennen.

Falls bei 104 erkannt wird, dass die Abweichung kleiner ist als der Schwellenwert, zeigt dies einen Fehlerzustand an. Entsprechend wird bei 105 ein Fehler-Betriebsmodus eingeleitet. Dazu kann ein Signal, das das Vorliegen eines Fehlers anzeigt, ausgegeben werden. Alternativ oder zusätzlich kann eine Sicherheitsabschaltung durchgeführt werden.

Während Ausführungsbeispiele unter Bezugnahme auf die Figuren beschrieben wurden, können Abwandlungen bei weiteren Beispielen realisiert werden. Während die Auswertung einer Phasenlage eines primärseitig erfassten Stroms zur Erkennung eines Fehlerzustands am Ausgang der Sekundärseite detailliert beschrieben wurde, können die Vorrichtungen nach Beispielen auch zur Erkennung anderer Betriebszustände eingesetzt werden. Beispielsweise kann nicht nur bestimmt werden, ob die Phasenlage des Stroms relativ zu den Schaltzyklen der Schalter der Halbbrücke näherungsweise 90° ist, sondern die Phasenlage des Stroms kann quantitativ ermittelt werden, um eine Last am Ausgang des Wandlers zu erkennen.

Die Erfassung einer den Strom auf der Primärseite repräsentierenden Größe muss nicht am Shunt-Widerstand erfolgen. Beispielsweise kann ein von dem Shunt-Widerstand verschiedener Messwiderstand vorgesehen werden.

Die Steuereinrichtung der Wandler und LED-Konverter kann als integrierte Halbleiterschaltung ausgestaltet sein. Die Steuereinrichtung kann als anwendungsspezifische Spezialschaltung (ASIC, "Application Specific Integrated Circuit") oder als anderer Chip ausgestaltet sein. Induktivitäten und Kapazitäten können jeweils durch entsprechende induktive bzw. kapazitive Elemente, beispielsweise als Spulen bzw. Kondensatoren, gebildet werden. Es ist jedoch auch möglich, dass kleinere Induktivitäten, beispielsweise eine Induktivität des LLC-Resonanzkreises, als Streuinduktivität ausgebildet sind. Ähnlich können kleinere Kapazitäten als Streukapazitäten ausgebildet sein.

Wandler nach Ausführungsbeispielen können insbesondere zur Energieversorgung von LEDs eingesetzt werden.

## Patentansprüche

1. Wandler für ein Leuchtmittel (3; 5), umfassend
eine primärseitige Schaltung (20; 50; 90) mit einer Halbbrückenschaltung, die zwei im Betrieb wechselseitig getaktete Schalter (21, 22) umfasst, und mit einem LLC-Resonanzkreis (25-27), wobei ein erster Schalter (21) der zwei wechselseitig getakteten Schalter zwischen einen Versorgungsanschluss (Vbus) der primärseitigen Schaltung (20; 50; 90) und den LLC-Resonanzkreis (25-27) geschaltet ist, und wobei ein zweiter Schalter (22) der zwei wechselseitig getakteten Schalter zwischen den LLC-Resonanzkreis (25-27) und ein Referenzpotential geschaltet ist,
eine von der primärseitigen Schaltung (20; 50; 90) galvanisch getrennte Sekundärseite (30) mit einem Ausgang (35) zur Energieversorgung des Leuchtmittels (3; 5), und eine Steuereinrichtung (14), wobei die Steuereinrichtung (14) eingerichtet ist, den ersten Schalter (21) der Halbbrückenschaltung und den zweiten Schalter (22) der Halbbrückenschaltung zu steuern, wobei die Steuereinrichtung (14) ferner eingerichtet ist, um abhängig von einer Phasenlage eines Stroms (52; 73) in der primärseitigen Schaltung (20; 50; 90) einen Fehlerzustand am Ausgang (35) der Sekundärseite (30) zu erkennen
**dadurch gekennzeichnet,**
**dass** die primärseitige Schaltung (20; 50; 90) eingerichtet ist, um zum Erfassen des Stroms (52; 73) eine Spannung an einem Messwiderstand (23), der zwischen den zweiten Schalter (22) der Halbbrückenschaltung und das Referenzpotential geschaltet ist, abzugreifen, wenn der erste Schalter (21) in einen Aus-Zustand geschaltet ist und der zweite Schalter (22) in einen Ein-Zustand geschaltet ist, und dass die Steuereinrichtung (14) eingerichtet ist, um den durch die Phasenlage des Stroms (52; 73) erkannten Fehlerzustand abhängig von einem Zeitpunkt (TN) eines Nulldurchgangs des Stroms (52; 73) zu erkennen, wobei die Steuereinrichtung (14) eingerichtet ist, um eine Abweichung zwischen dem Zeitpunkt (TN) des Nulldurchgangs und einer Referenzzeit (TM) zu bestimmen und um den Fehlerzustand abhängig von einem Schwellenwertvergleich der Abweichung zu erkennen.

2. Wandler nach Anspruch 1, wobei das Referenzpotential an Masse geschaltet ist.

3. Wandler nach Anspruch 1 oder 2,
ferner umfassend einen Komparator (51), welcher einen Eingang zum Empfangen der Spannung an dem Messwiderstand (23), die zu dem Strom (52; 73) proportional ist, aufweist, und wobei die Steuereinrichtung (14) mit einem Ausgang (35) des Komparators (51) gekoppelt ist, um den Zeitpunkt (TN) des Nulldurchgangs zu bestimmen.

4. Wandler nach einem der Ansprüche 1-3,
wobei die Steuereinrichtung (14) eingerichtet ist, um die Referenzzeit (TM) abhängig von einer ersten Schaltzeit (T1), bei der der erste Schalter (21) der Halbbrückenschaltung in den Aus-Zustand geschaltet wird, und einer zweiten Schaltzeit (T2), bei der der zweite Schalter (22) der Halbbrückenschaltung in den Aus-Zustand geschaltet wird, zu bestimmen.

5. Wandler nach Anspruch 4,
wobei die Steuereinrichtung (14) eingerichtet ist, um die Referenzzeit (TM) als Mitte zwischen der ersten Schaltzeit (T1) und der zweiten Schaltzeit (T2) zu bestimmen.

6. Wandler nach einem der Ansprüche 1-5,
wobei die Steuereinrichtung (14) eingerichtet ist, um ein erstes getaktetes Steuersignal (ctrl1; 61) und ein zweites getaktetes Steuersignal (ctrl2; 62) zum Steuern der Halbbrückenschaltung zu erzeugen, und
wobei die Steuereinrichtung (14) eingerichtet ist, um die Referenzzeit (TM) abhängig von sowohl dem ersten getakteten Steuersignal (ctrl1; 61) als auch dem zweiten getakteten Steuersignal (ctrl2; 62) zu bestimmen.

7. Wandler nach Anspruch 6,
wobei die Steuereinrichtung (14) eingerichtet ist, um zum Durchführen des Schwellenwertvergleichs die Abweichung mit einem Schwellenwert zu vergleichen, der kleiner ist als eine Periode des ersten getakteten Steuersignals (ctrl1; 61) und des zweiten getakteten Steuersignals (ctrl2; 62).

8. LED-Konverter, umfassend
den Wandler (19; 49; 89) nach einem der vorhergehenden Ansprüche.

## Claims

1. Converter for a luminous means (3; 5) comprising
- a primary-side circuit (20; 50; 90) having a half-bridge circuit comprising two reciprocally-clocked switches (21; 22) and an LLC resonant circuit (25-27), wherein a first switch (21) of the two reciprocally-clocked switches is connected between a supply terminal (Vbus) of the primary-side circuit (20; 50; 90) and the LLC resonant circuit (25-27), and wherein a second switch (22) of the two reciprocally-clocked switches is connected between the LLC resonant circuit (25-27) and a reference voltage,
- a secondary side (30) having an output (35) for the power supply of the lighting means (3; 5) and that is galvanically isolated from the primary-side circuit (20; 50; 90), and
- a control device (14), wherein the control device (14) is designed to control the first switch (21) of the half-bridge circuit and the second switch (22) of the half-bridge circuit, wherein the control device (14) is further designed to detect a deviation at the output (35) of the secondary side (30) as a function of a phase position of a current (52; 73) in the primary-side circuit (20; 50; 90),
**characterized in that**
- the primary-side circuit (20; 50; 90) is designed to tap a voltage across a measuring resistor (23) connected between the second switch (22) of the half-bridge circuit and the reference potential, in order to detect the current (52; 73) when the first switch (21) is switched to an off state, and the second switch (22) is switched to an on state, and
- the control device (14) is designed to detect the deviation through the phase position of the current (52; 73) as a function of a time (TN) of a zero crossover of the current (52; 73), wherein the control device (14) is designed to detect a deviation between the time (TN) of the zero crossover and a reference time (TM), and to detect the deviation as a function of a threshold comparison of the deviation.

2. Converter according to claim 1, wherein the reference potential is connected to ground.

3. Converter according to claim 1 or 2, further comprising a comparator (51) having an input for receiving the voltage across the measuring resistor (23) proportional to the current (52; 73), and wherein the control device (14) is coupled to an output (35) of the comparator (51) in order to determine the time (TN) of the zero crossover.

4. Converter according to any one of claims 1-3, wherein the control device (14) is designed to determine the reference time (TM) as a function of a first switching time (T1) at which the first switch (21) of the half-bridge circuit is switched to the off state, and a second switching time (T2) at which the second switch (22) of the half-bridge circuit is switched to the off-state.

5. Converter according to claim 4, wherein the control device (14) is designed to determine the reference time (TM) as a mean between the first switching time (T1) and the second switching time (T2).

6. Converter according to any one of claims 1-5,
wherein the control device (14) is arranged to generate a first clocked control signal (ctrl1; 61) and a second clocked control signal (ctrl2; 62) for controlling the half-bridge circuit, and
wherein the control device (14) is arranged to determine the reference time (TM) in response to both the first clocked control signal (ctrl1; 61) and the second clocked control signal (ctrl2; 62).

7. Converter according to claim 6, wherein the control means (14) are designed to compare the deviation with a threshold value that is smaller than a period of the first clocked control signal (ctrl1; 61) and the second clocked control signal (ctrl2; 62) in order to perform the threshold comparison.

8. LED converter, comprising the transducer (19; 49; 89) according to one of the preceding claims.

## Revendications

1. Transducteur pour un moyen d'éclairage (3 ; 5), comprenant un circuit (20 ; 50 ; 90) côté primaire avec un montage en demi-pont qui comprend deux commutateurs (21, 22) cadencés alternativement en fonctionnement, et avec un circuit résonant LLC (25-27), un premier commutateur (21) des deux commutateurs cadencés alternativement étant monté entre une connexion d'alimentation (Vbus) du circuit (20 ; 50 ; 90) côté primaire et le circuit résonant LLC (25-27), et un deuxième commutateur (22) des deux commutateurs cadencés alternativement étant monté entre le circuit résonant LLC (25-27) et un potentiel de référence,
un côté secondaire (30) séparé galvaniquement du circuit (20 ; 50 ; 90) côté primaire, avec une sortie (35) pour l'alimentation en énergie du moyen d'éclairage (3 ; 5),
et
un dispositif de commande (14), le dispositif de commande (14) étant agencé pour commander le premier commutateur (21) du montage en demi-pont et le deuxième commutateur (22) du montage en demi-pont, le dispositif de commande (14) étant agencé également pour, en fonction d'une position de phase d'un courant (52 ; 73) dans le circuit (20 ; 50 ; 90) côté primaire, identifier un état d'erreur sur la sortie (35) du côté secondaire (30),
**caractérisé en ce que**
le circuit (20 ; 50 ; 90) côté primaire est agencé pour, à des fins de détection du courant (52 ; 73), prélever une tension sur une résistance de mesure (23) qui est montée entre le deuxième commutateur (22) du montage en demi-pont et le potentiel de référence quand le premier commutateur (21) est commuté dans un état hors circuit et le deuxième commutateur (22) est commuté dans un état en circuit, et
**en ce que** le dispositif de commande (14) est agencé pour identifier l'état d'erreur, identifié par la position de phase du courant (52 ; 73), en fonction d'un instant (TN) d'un passage par zéro du courant (52 ; 73), le dispositif de commande (14) étant agencé pour déterminer une divergence entre l'instant (TN) du passage par zéro et un temps de référence (TM) et pour identifier l'état d'erreur en fonction d'une comparaison de valeurs de seuil de la divergence.

2. Transducteur selon la revendication 1,
le potentiel de référence étant relié à la masse.

3. Transducteur selon la revendication 1 ou 2,
comprenant également un comparateur (51) qui présente une entrée pour la réception de la tension sur la résistance de mesure (23) qui est proportionnelle au courant (52 ; 73), et
le dispositif de commande (14) étant couplé avec une sortie (35) du comparateur (51) pour déterminer l'instant (TN) du passage par zéro.

4. Transducteur selon l'une des revendications 1 à 3,
le dispositif de commande (14) étant agencé pour déterminer le temps de référence (TM) en fonction d'un premier temps de commutation (T1) auquel le premier commutateur (21) du montage en demi-pont est commuté dans l'état hors circuit, et d'un deuxième temps de commutation (T2) auquel le deuxième commutateur (22) du montage en demi-pont est commuté dans l'état hors circuit.

5. Transducteur selon la revendication 4,
le dispositif de commande (14) étant agencé pour déterminer le temps de référence (TM) en tant que milieu entre le premier temps de commutation (T1) et le deuxième temps de commutation (T2) .

6. Transducteur selon l'une des revendications 1 à 5,
le dispositif de commande (14) étant agencé pour produire un premier signal de commande (ctrl1 ; 61) cadencé et un deuxième signal de commande (ctrl2 ; 62) cadencé pour commander le montage en demi-pont, et
le dispositif de commande (14) étant agencé pour déterminer le temps de référence (TM) en fonction aussi bien du premier signal de commande (ctrl1 ; 61) cadencé que du deuxième signal de commande (ctrl2 ; 62) cadencé.

7. Transducteur selon la revendication 6,
le dispositif de commande (14) étant agencé pour, pour la réalisation de la comparaison de valeurs de seuil, comparer la divergence avec une valeur de seuil qui est plus petite qu'une période du premier signal de commande (ctrl1 ; 61) cadencé et du deuxième signal de commande (ctrl2 ; 62) cadencé.

8. Convertisseur LED, comprenant le transducteur (19 ; 49 ; 89) selon l'une des revendications précédentes.
